# EUROPÄISCHE PATENTSCHRIFT

(11) **EP 3 080 851 B1**
(45) Veröffentlichungstag und Bekanntmachung des Hinweises auf die Patenterteilung: **03.07.2019**
(21) Anmeldenummer: 14801980.5
(22) Anmeldetag: 13.11.2014
(51) Int. Cl.: H01M 10/6568, H01M 2/10, H01M 10/625, H01M 10/6556, H01M 10/6567, H01M 10/617, H01M 10/613, H01M 10/656, H01M 10/6569, B60L 58/26

(54) **BATTERIESYSTEM SOWIE BATTERIEMODUL**
BATTERY SYSTEM AND BATTERY MODULE
SYSTÈME DE BATTERIE ET MODULE DE BATTERIE

(30) Priorität: 11.12.2013 DE 102013225521
(43) Veröffentlichungstag der Anmeldung: 19.10.2016
(73) Patentinhaber: Bayerische Motoren Werke Aktiengesellschaft, 80809 München (DE)
(72) Erfinder: EINOEGG, Florian, 81549 München (DE); FLAHAUT, Nicolas, 81373 München (DE); HUBER, Michael, 80335 München (DE); SIERING, Sebastian, 80333 München (DE); WEILEDER, Stephan, 80333 München (DE); RING, Andreas, 82140 Olching (DE)
(86) Internationale Anmeldenummer: PCT/EP2014/074450
(87) Internationale Veröffentlichungsnummer: WO 2015/086250

(56) Entgegenhaltungen:
- WO-A2-2007/076985
- WO-A2-2011/060074
- DE-A1-102010 025 656
- US-A1- 2011 262 794
- US-A1- 2012 003 522

## Beschreibung

Die vorliegende Erfindung betrifft ein Batteriesystem, das insbesondere mehrere derartige Batteriemodule umfasst. Schließlich betrifft die Erfindung ein Fahrzeug, das ein Batteriesystem umfasst.

Insbesondere in Elektrofahrzeugen und Hybridfahrzeugen werden Batteriesysteme verwendet, um elektrische Komponenten der Fahrzeuge mit elektrischer Energie versorgen zu können. Zur Sicherung der Reichweite, Lebensdauer und abrufbarer Leistung ist ein definiertes Temperaturmanagement der Batteriesysteme und der Batteriemodule nötig. Dabei ist erforderlich, dass Temperaturspreizungen zwischen einzelnen Batteriemodulen oder einzelnen Zellen der Batteriemodule so gering wie möglich gehalten werden.

Zum Beibehalten einer definierten Temperatur sind mehrere Ansätze möglich. Einerseits kann das Batteriemodul von einem Kühlmittel umgeben werden, um so das Batteriemodul zu kühlen. Alternativ ist auch ein Umgeben des Batteriemoduls mit einem Direktkältemitte! möglich, was eine höhere Kälteleistung ermöglicht

In Fahrzeugen ist oftmals ein Kältekreislauf vorhanden, mit dem ein Innenraum des Kraftfahrzeugs klimatisiert wird. Ein derartiger Kältekreislauf ist auch zum Temperaturmanagement von Batteriemodulen verwendbar. Hierbei entsteht jedoch das Problem, dass bei niedrigen Außentemperaturen eine Druckdifferenz im Kältekreislauf sinkt, wodurch der Massenstrom des Kältemittels nicht ausreicht, um das Batteriesystem und/oder das Batteriemodul ausreichend zu kühlen. Es entsteht daher oftmals eine Temperaturspreizung innerhalb der einzelnen Zellen der Batteriemodule des Batteriesystems.

Aus der DE 10 2010 025656 A1 ist ein Batteriesystem bekannt, umfassend eine Vielzahl von Batteriemodulen mit einer Kühlvorrichtung, umfassend zumindest eine erste Leitung und zumindest eine zweite Leitung, wobei die erste Leitung und die zweite Leitung ein Fluid führen und Wärme von Zellen des Batteriemoduls aufnehmen und auf das Fluid übertragen, wobei die erste Leitung und die zweite Leitung lotrecht zu den Zellen des Batteriemoduls verlaufen, die erste Leitung und die zweite Leitung parallel zueinander angeordnet sind, und eine Strömungsrichtung des Fluids in der ersten Leitung entgegengesetzt zu einer Strömungsrichtung des Fluids in der zweiten Leitung ist, wobei die Batteriemodule derart angeordnet sind, dass die ersten Leitungen und die zweiten Leitungen der Batteriemodule parallel zueinander verlaufen, wobei eine Fließrichtung des Fluids innerhalb der ersten Leitungen bei benachbarten Batteriemodulen identisch oder entgegengesetzt ist.

Es ist daher Aufgabe der Erfindung, ein Batteriesystem bereitzustellen, das bei einfacher und kostengünstiger Fertigung und Montage eine sichere und zuverlässige Kühlung von Zellen des Batteriemoduls ermöglicht.

Die Lösung der Aufgabe erfolgt durch die Merkmale des Anspruches 1. Somit wird die Aufgabe gelöst durch ein Batteriesystem mit einer Vielzahl von Batteriemodulen mit einer Kühlvorrichtung, das zumindest je eine erste Leitung und zumindest eine zweite Leitung umfasst. Die erste Leitung und die zweite Leitung führen ein Fluid, wobei Wärme von den Zellen des Batteriemoduls auf das Fluid übertragbar ist. Dabei ist vorgesehen, dass die erste Leitung und die zweite Leitung lotrecht zu den Zellen des Batteriemoduls verlaufen. Das Batteriesystem ist derart ausgestaltet, dass das Batteriesystem in eine Vielzahl von Teilbereichen mit einer vordefinierten Anzahl von Batteriemodulen unterteilt ist. Dabei sind die Kühlsysteme der Batteriemodule innerhalb eines Teilbereichs insbesondere in Reihe miteinander verschaltet, während die Reihenschaltungen der einzelnen Teilbereiche parallel verschaltet sind. So sind die ersten Leitungen und die zweiten Leitungen der Batteriemodule innerhalb eines Teilbereichs zwischen einem ersten Batteriemodul und einem letzten Batteriemodul in Reihenschaltung verbunden. Weiterhin ist ein Verbindungselement vorhanden, das die erste Leitung und die zweite Leitung des letzten Batteriemoduls jedes Teilbereichs verbindet. Auf diese Weise ist die Reihenschaltung realisiert. Weiterhin ist die erste Leitung des ersten Batteriemoduls jedes Teilbereichs mit zumindest einem ersten Verteiler verbunden, wobei der erste Verteiler das Fluid aufnimmt. Zusätzlich ist die zweite Leitung des ersten Batteriemoduls jedes Teilbereichs mit zumindest einem zweiten Verteiler verbunden, wobei der zweite Verteiler das Fluid abgibt. Durch diese Mischung aus Reihenschaltung und Parallelschaltung ist insbesondere eine vorteilhafte Verteilung des Fluids innerhalb des Batteriesystems gewährleistet. Somit ist eine optimale Kühlung der Batteriemodule vorhanden. Dabei ist dennoch sichergestellt, dass stets ein Mittelwert der Kühlleistung zwischen erster Leitung und zweiter Leitung für jedes Batteriemodul identisch ist. Damit ist eine Temperaturspreizung innerhalb des Batteriesystems wirksam vermeidbar. Unter "lotrecht" ist insbesondere ein Winkel von 90° oder zumindest im Wesentlichen 90° zu verstehen. Die Zellen sind insbesondere Einheiten des Batteriemoduls, die elektrische Energie speichern und abgeben. Insbesondere soll die hierbei anfallende Wärme durch die erste Leitung und die zweite Leitung abgeführt werden. Dazu ist bevorzugt vorgesehen, dass die erste Leitung und/oder die zweite Leitung an jeder zu kühlenden Zelle des Batteriemoduls vorbeigeführt ist, so dass die erste Leitung und/oder die zweite Leitung Wärme von den Zellen auf das Fluid überträgt. Besonders bevorzugt ist vorgesehen, dass die erste Leitung und/oder die zweite Leitung mit allen Zellen des Batteriemoduls einen Wärmeübergangskontakt aufweist, so dass mit der ersten Leitung und/oder der zweiten Leitung alle Zellen des Batteriemoduls kühlbar sind. Ebenso ist besonders bevorzugt vorgesehen, dass sowohl die erste Leitung als auch die zweite Leitung Wärme von sämtlichen Zellen des Batteriemoduls aufnimmt und an das Fluid überträgt. Die Zellen weisen vorteilhafterweise eine Längsrichtung und eine Querrichtung auf, wobei ein Abmaß der Zellen in Längsrichtung größer ist als ein Abmaß der Zellen in Querrichtung. Die erste Leitung und/oder die zweite Leitung verlaufen vorteilhafterweise parallel zu der Querrichtung und somit orthogonal zu der Längsrichtung. Außerdem sind die erste Leitung und die zweite Leitung parallel zueinander angeordnet, wobei eine Strömungsrichtung des Fluids in der ersten Leitung entgegengesetzt zu einer Strömungsrichtung des Fluids in der zweiten Leitung ist. Somit wird eine effiziente und gleichmäßige Kühlung des Batteriemoduls erreicht.

Wie bereits ausgeführt, ist ein Batteriemodul aus einzelnen Zellen, aufgebaut. Bei diesen Zellen soll es sich jeweils um eine zur Umgebung abgeschlossene Einheit handeln, in deren Inneren das für das Speichern der elektrischen Energie benötigte Elektrodenmaterial angeordnet ist. Vorzugsweise können diese Zellen als prismatisch geformte Li-Ion Speicherzellen ausgebildet sein, die für gewöhnlich eine Speicherzellenspannung in der Größenordnung von 2,8 bis 4,2 Volt aufweisen können. Innerhalb des Batteriemoduls sind die einzelnen Speicherzellen zur Realisierung einer Batteriemodulspannung elektrisch in Serie geschaltet.

Die Unteransprüche haben bevorzugte Weiterbildungen der Erfindung zum Inhalt.

Bevorzugt ist vorgesehen, dass jede Zelle des Batteriemoduls ein Ausgleichsmedium aufweist. Durch das Ausgleichsmedium ist vorteilhafterweise eine Temperaturdifferenz zwischen der ersten Leitung und der zweiten Leitung ausgleichbar. Daher ist mit der erfindungsgemäßen Kühlvorrichtung eine gleichmäßige Temperatur innerhalb der Zelle erreichbar.

Weiterhin ist vorteilhafterweise vorgesehen, dass jede Zelle ein Gehäuse aufweist, durch das eine Temperaturdifferenz zwischen der ersten Leitung und der zweiten Leitung ausgleichbar ist. Somit wird bevorzugt sichergestellt, dass eine Temperatur innerhalb der Zelle homogen ist. Auf diese Weise werden vorteilhafterweise Beschädigungen und damit verkürzte Lebensdauern der Zellen vermieden.

Das Fluid ist bevorzugt ein Kältemittel oder ein Kühlmittel, Die Verwendung von Kältemitteln ist insbesondere dann vorteilhaft, wenn Umgebungstemperaturen des Batteriemoduls höher sind als eine vordefinierte Temperatur, auf der die Zellen des Batteriemoduls gehalten werden soll. Das alternativ zu verwendende Kühlmittel vereinfacht den Aufbau der Kühlvorrichtung und damit des gesamten Batteriemoduls.

Besonders bevorzugt sind die zuvor genannten Batteriesysteme derart ausgebildet, dass die ersten Leitungen der Batteriemodule und die zweiten Leitungen der Batteriemodule zwischen einem ersten Batteriemodul und einem letzten Batteriemodul in Reihenschaltung verbunden sind. Dabei ist vorgesehen, dass die erste Leitung des ersten Batteriemoduls das Fluid aufnimmt und die zweite Leitung des ersten Batteriemoduls das Fluid abgibt. Weiterhin ist vorgesehen, dass ein Verbindungselement die erste Leitung des letzten Batteriemoduls und die zweite Leitung des letzten Batteriemoduls verbindet. Auf diese Weise ist insbesondere ein Fluss des Fluids von der ersten Leitung des ersten Batteriemoduls, die das Fluid aufnimmt, zu der zweiten Leitung des ersten Batteriemoduls, die das Fluid abgibt, realisierbar, wobei das Fluid sämtliche ersten Leitungen und sämtliche zweiten Leitungen aller Batteriemodule durchläuft. Da das Fluid zunächst sämtliche ersten Leitungen und anschließend sämtliche zweiten Leitungen durchläuft, bildet sich stets ein Mittelwert einer Kühlleistung zwischen der ersten Leitung und der zweiten Leitung für jedes Batteriemodul aus. Dieser Mittelwert ist vorteilhafterweise für alle Batteriemodule des Batteriesystems identisch oder zumindest nahezu identisch. Somit wird eine Spreizung von Temperaturen innerhalb des Batteriesystems wirksam vermieden.

Alternativ ist das zuvor beschriebene Batteriesystem besonders bevorzugt derart ausgebildet, dass jede erste Leitung jedes Batteriemoduls mit zumindest einem ersten Verteiler verbunden ist, wobei der erste Verteiler das Fluid aufnimmt. Weiterhin ist jede zweite Leitung jedes Batteriemoduls besonders bevorzugt mit zumindest einem zweiten Verteiler verbunden, wobei der zweite Verteiler das Fluid abgibt. Schließlich ist für jedes Batteriemodul zumindest ein Verbindungselement vorgesehen, das die erste Leitung und die zweite Leitung des Batteriemoduls verbindet. Somit ist eine Parallelverschaltung jedes Batteriemoduls realisiert. Eine Temperaturspreizung zwischen den Batteriemodulen wird daher wirksam verhindert, da jedes Batteriemodul mit dem gleichen Fluid versorgt wird, so dass jedes Batteriemodul dieselbe Wärmemenge an das Fluid abgibt. Wiederum ist bevorzugt vorgesehen, dass ein Mittelwert der Kühlleistung zwischen der ersten Leitung und der zweiten Leitung bei jedem Batteriemodul identisch ist oder zumindest nahezu identisch ist. Daher ist auch durch die Parallelschaltung eine Temperaturspreizung innerhalb des Batteriesystems wirksam vermeidbar.

Die Erfindung betrifft weiterhin ein Fahrzeug, das ein zuvor beschriebenes Batteriesystem umfasst. Das Fahrzeug ist insbesondere ein Elektrofahrzeug oder ein Hybridfahrzeug, wobei das Batteriemodul und/oder das Batteriesystem vorteilhafterweise zur Energieversorgung eines Antriebs des Fahrzeugs nutzbar ist.

Durch das erfindungsgemäße Batteriesystem ist eine Reichweite, Lebensdauer und/oder Leistung der Elektrofahrzeuge und/oder Hybridfahrzeuge in ausreichendem Maße sichergestellt, indem Temperaturspreizungen vermieden werden. Somit ist stets eine gleichmäßige Kühlung erreichbar.

Weitere Einzelheiten, Merkmale und Vorteile der Erfindung ergeben sich aus der nachfolgenden Beschreibung und den Figuren. Es zeigen:
Figur 1 eine schematische Darstellung eines Batteriemoduls gemäß einem Ausführungsbeispiel der Erfindung,
Figur 2 eine schematische Ausführungsform eines Teils eines Batteriesystems gemäß einem ersten Ausführungsbeispiel der Erfindung,
Figur 3 eine schematische Ausführungsform eines Teils eines Batteriesystems gemäß einem zweiten Ausführungsbeispiel der Erfindung,
Figur 4 eine schematische Ausführungsform eines Batteriesystems gemäß einem dritten Ausführungsbeispiel der Erfindung,
Figur 5 eine schematische Ausführungsform eines Batteriesystems gemäß einem vierten Ausführungsbeispiel der Erfindung, und
Figur 6 ein Fahrzeug gemäß einem Ausführungsbeispiel der Erfindung.

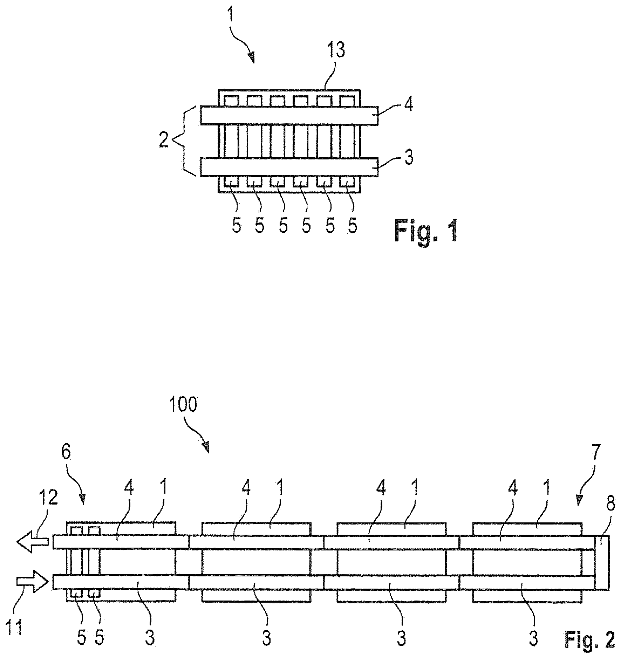

Figur 1 zeigt ein Batteriemodul 1 gemäß einem Ausführungsbeispiel der Erfindung. Das Batteriemodul 1 umfasst einen Zellkörper 13, in dem einzelne Zellen 5 des Batteriemoduls 1 angeordnet sind. Die einzelnen Zellen 5 dienen der Speicherung und Ausgabe von elektrischer Energie. Da sowohl beim Speichern als auch beim Abgeben der elektrischen Energie stets eine Verlustleistung als Wärme anfällt, müssen die einzelnen Zellen 5 gekühlt werden, um ein Überhitzen der Zellen 5 zu vermeiden. Das Überhitzen der Zeilen 5 würde ansonsten die Lebensdauer und die Leistung der Zellen 5 und damit des Batteriemoduls deutlich vermindern.

Zur Kühlung der Zellen 5 weist das Batteriemodul 1 eine Kühlvorrichtung 2 auf. Die Kühlvorrichtung 2 umfasst eine erste Leitung 3 sowie eine zweite Leitung 4. Innerhalb der ersten Leitung 3 und der zweiten Leitung 4 ist ein Fluid führbar, das Wärmeenergie von den Zellen 5 aufnimmt. Bevorzugt ist das Fluid entweder ein Kühlmittel oder ein Kältemittel. Die erste Leitung 3 und die zweite Leitung 4 sind parallel zueinander angeordnet und verlaufen lotrecht zu den Zellen 5. Die erste Leitung 3 sowie die zweite Leitung 4 sind dabei vorteilhafterweise symmetrisch bezüglich der Zellen 5 angeordnet. Somit ist sichergestellt, dass sich stets ein konstanter Mittelwert der Kühlleistung der ersten Leitung 3 sowie der zweiten Leitung 4 einstellt, so dass jede Zelle 5 eine optimale und gleichmäßige Kühlung erfährt.

Figur 2 zeigt einen Teil eines Batteriesystems 100 gemäß einem ersten Ausführungsbeispiel der Erfindung. Hierbei sind die einzelnen Batteriezellen 1 aus Figur 1 in einer Reihenschaltung nach dem Gegenstromprinzip angeordnet. Dazu sind die Batteriemodule 1 räumlich hintereinander angeordnet. Sämtliche ersten Leitungen 3 sind miteinander verbunden, ebenso wie sämtliche zweiten Leitungen 4 aller Batteriemodule 1. Somit sind sämtliche ersten Leitungen 3 in einer Reihenschaltung von einem ersten Batteriemodul 6 zu einem letzten Batteriemodul 7 verschaltet. An dem letzten Batteriemodul 7 ist Verbindungselement 8 vorhanden, das die erste Leitung 3 und die zweite Leitung 4 verbindet. Das erste Batteriemodul 6 weist einen Fluideingang 11 sowie einen Fluidausgang 12 auf. Die erste Leitung 3 ist mit dem Fluideingang 11 verbunden, während die zweite Leitung 4 mit dem Fluidausgang 12 verbunden ist. Daher ist das Batteriesystem 100 gemäß dem ersten Ausführungsbeispiel ausgebildet, dass das erste Batteriemodul 6 aus dem Fluideingang 11 ein Fluid in die erste Leitung 3 aufnimmt, wobei das Fluid anschließend sämtliche ersten Leitungen 3 durchläuft, bis das Fluid in dem letzten Batteriemodul 7 durch das Verbindungselement 8 in die zweite Leitung 4 des letzten Batteriemoduls 7 überführt wird. Von dem letzten Batteriemodul 7 wird das Fluid durch sämtliche zweiten Leitungen 4 aller Batteriemodule 1 geleitet, bis das Fluid in dem ersten Batteriemodul 6 durch die zweite Leitung 4 des ersten Batteriemoduls 6 an den Fluidausgang 12 abgegeben wird. Somit durchläuft das Fluid zunächst sämtliche Batteriemodule 1, um anschließend nochmals sämtliche Batteriemodule 1 in entgegengesetzter Richtung zu durchlaufen. Daher stellt sich ein Mittelwert in der Kühlleistung durch das Fluid ein, der für alle Batteriemodule 1 identisch oder zumindest nahezu identisch ist. Dies resultiert daraus, dass beispielsweise das erste Batteriemodul 6 an der ersten Leitung 3 die höchste Kühlleistung im gesamten Batteriesystem 100 erfährt, an der zweiten Leitung 4 jedoch die geringste Kühlleistung im Batteriesystem 100. Dahingegen ist im letzten Batteriemodul 7 die Kühlleistung an der ersten Leitung 3 und an der zweiten Leitung 4 nahezu identisch. Durch die erfindungsgemäße Verschattung der Kühlvorrichtungen 2 der Batteriemodule 1 stellt das Batteriesystem 100 sicher, dass eine Temperaturspreizung der Batteriemodule 1 nahezu vermieden wird..

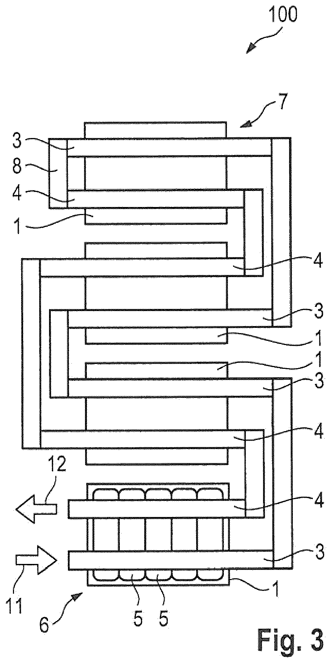

Figur 3 zeigt einen Teil eines Batteriesystems 100 gemäß einem zweiten Ausführungsbeispiel der Erfindung. In diesem Ausführungsbeispiel sind die Kühlvorrichtungen 2 der Batteriemodule 1 des Batteriesystems 100 mäanderförmig verschaltet. Dazu sind die Batteriemodule 1 räumlich nebeneinander angeordnet. Die Wirkweise der Verschattung der Kühlvorrichtungen 2 ist dabei identisch zu dem ersten Ausführungsbeispiel. Daher zeigen gleiche Bezugszeichen gleiche Bauelemente oder funktional gleiche Bauelemente, wie in dem ersten Ausführungsbeispiel.

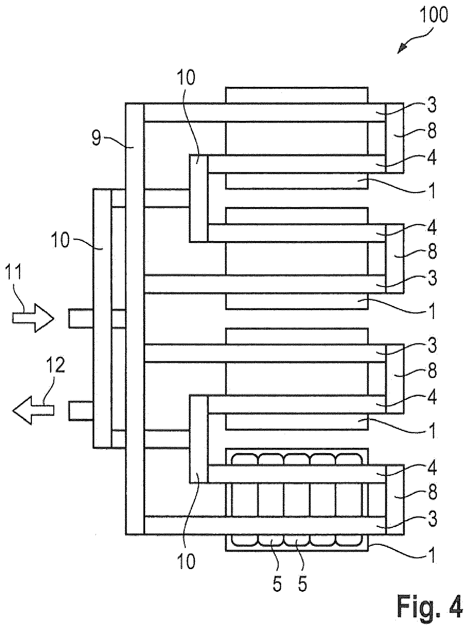

Figur 4 zeigt ein Batteriesystem 100 gemäß einem dritten Ausführungsbeispiel der Erfindung. Hierbei sind die Kühlvorrichtungen 2 der Batteriemodule.1 parallel verschaltet. Daher weist jede erste Leitung 3 jeder Batteriemodule 1 eine Verbindung mit einem ersten Verteiler 9 auf. Der erste Verteiler 9 wiederum weist einen Fluideinlass 1 auf, so dass der Verteiler 9 ein Fluid aufnimmt und dieses an die einzelnen ersten Leitungen 3 sämtlicher Batteriemodule 1 verteilt. Jedes Batteriemodul 1 weist ein Verbindungselement 8 auf, das jeweils die erste Leitung 3 mit der zweiten Leitung 4 jedes Batteriemoduls 1 verbindet. Die zweiten Leitungen 4 jedes Batteriemoduls 1 wiederum sind über zwei zweite Verteiler 10 mit einem Fluidauslass 12 verbunden.

Dies gilt insbesondere dann, wenn das Fluid ein Kühlmittel ist, Falls das Fluid ein Kältemittel ist, ist die beliebig wählbare Anzahl an ersten Verteilern 9 und an zweiten Verteilern 10 vorteilhafterweise auf einen vordefinierten Maximalwert begrenzt, um eine gleichmäßige Verteilung des Kältemittels sicherzustellen. Durch die Parallelverschaltung ist eine Kühlleistung in allen Batteriemodulen 1 identisch, da sämtliche Batteriemodule 1 über den ersten Verteiler 9 dieselbe Menge an Fluid aus dem Fluideinlass 1 erhalten. Das Fluid wird, nachdem es von der ersten Leitung 3 über das Verbindungselement 8 an die zweite Leitung 4 eines jeden Batteriemoduls 1 übergeben wurde, durch die zweiten Verteiler 10 abgegeben und dem Fluidauslass 12 zugeführt. Somit wird auch in dem Batteriesystem 100 gemäß dem dritten Ausführungsbeispiel eine Temperaturspreizung zwischen den einzelnen Batteriemodulen 1 wirksam verhindert.

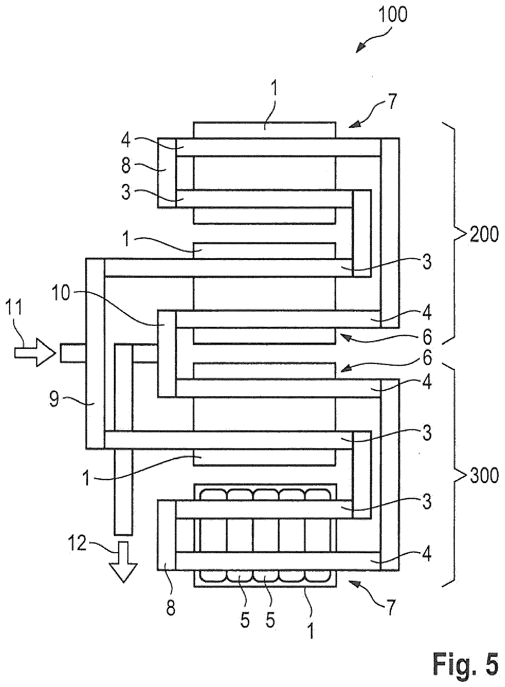

Figur 5 zeigt ein Batteriesystem 100 gemäß einem vierten Ausführungsbeispiel der Erfindung. Das vierte Ausführungsbeispiel zeigt eine kombinierte Parallelverschaltung und Mäanderverschaltung. Dazu wird das Batteriesystem 100 in einen ersten Teilbereich 200 und in einen zweiten Teilbereich 300 aufgeteilt. Innerhalb des ersten Teilbereichs 200 sowie innerhalb des zweiten Teilbereichs 300 sind die Batteriemodule 1 von einem ersten Batteriemodul 6 zu einem letzten Batteriemodul 7 in einer Reihenschaltung mäanderförmig verschaltet. Daher sind sämtliche ersten Leitungen 3 sämtlicher Batteriemodule 1 des ersten Teilbereichs 200 sowie sämtliche zweiten Leitungen 4 sämtlicher Batteriemodule 1 des ersten Teilbereichs 200 miteinander verbunden. Ebenso sind sämtliche ersten Leitungen 3 sämtlicher Batteriemodule 1 des zweiten Teilbereichs 300 miteinander verbunden und auch sämtliche zweiten Leitungen 4 sämtlicher Batteriemodule 1 des zweiten Teilbereichs 300 sind miteinander verbunden. Die letzten Batteriemodule 7 des ersten Teilbereichs 200 und des zweiten Teilbereichs 300 weisen ein Verbindungselement 8 auf, mit dem die erste Leitung 3 des letzten Batteriemoduls 7 mit der zweiten Leitung 4 des letzten Batteriemoduls 7 verbunden ist. Somit erlaubt die Verschaltung innerhalb des ersten Teilbereichs 200 und innerhalb des zweiten Teilbereichs 300, dass ein Fluid von der ersten Leitung 3 des jeweiligen ersten Batteriemoduls 6 durch sämtliche.ersten Leitungen 3 und sämtliche zweiten Leitungen 4 aller Batteriemodule 1 des jeweiligen Teilbereichs 200, 300 bis zu der zweiten Leitung 4 des ersten Batteriemoduls 6 transportierbar ist.

Um ein Fluid aufzunehmen, sind die ersten Leitungen 3 des ersten Batteriemoduls 6 mit einem ersten Verteiler 9 verbunden. Der erste Verteiler 9 ist mit einem Fluideinlass 11 verbunden, so dass den ersten Leitungen 3 der ersten Batteriemodule 6 das Fluid zuführbar ist. Ebenso sind die zweiten Leitungen 4 der ersten Batteriemodule 6 mit einem zweiten Verteiler 10 verbunden. Der zweite Verteiler 10 wiederum ist mit einem Fluidauslass 12 verbunden, so dass über die zweiten Leitungen 4 der ersten Batteriemodule 6 das Fluid abgebbar ist. Das vierte Ausführungsbeispiel zeigt ein Batteriesystem 100, bei dem vorteiihafterweise eine Vielzahl von Batteriemodulen 1 verschaltbar sind. Da jedoch insbesondere Kältemittel nur schwierig durch Verteiler gleichmäßig verteilbar ist, bietet das vierte Ausführungsbeispiel des Batteriesystems 100 eine vorteilhafte Verschaltungsmöglichkeit, um dennoch eine große Anzahl an Batteriemodulen 1 kühlen zu können.

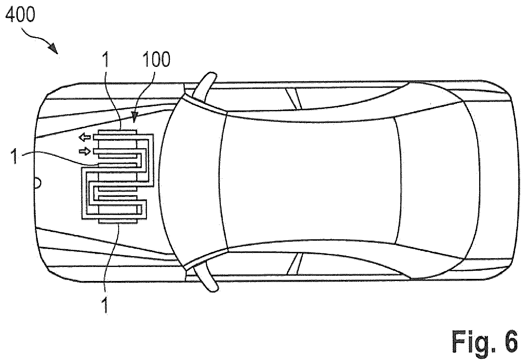

Figur 6 zeigt ein Fahrzeug 400 gemäß einem Ausführungsbeispiel der Erfindung. Das Fahrzeug 400 ist insbesondere ein Elektrofahrzeug oder ein Hybridfahrzeug. Zum Antrieb eines Elektromotors des Fahrzeugs 400 ist ein Batteriesystem 100 vorhanden. Das Batteriesystem 100 umfasst mehrere Batteriemodule 3, die elektrische Energie speichern und die elektrische Energie an den Elektromotor abgeben. Zusammen mit der erfindungsgemäßen Kühlvorrichtung der Batteriemodule 1 ist daher eine zuverlässige Kühlung der Batteriemodule 1 vorhanden, so dass eine Leistung und eine Lebensdauer des Batteriesystems 100 maximiert wird.

## Patentansprüche

1. Batteriesystem (100), umfassend eine Vielzahl von Batteriemodulen (1) mit einer Kühlvorrichtung, umfassend je zumindest eine erste Leitung (3) und zumindest eine zweite Leitung (4), wobei die erste Leitung (3) und die zweite Leitung (4) ein Fluid führen und Wärme von Zellen (2) des Batteriemoduls (1) aufnehmen und auf das Fluid übertragen, wobei
- die erste Leitung (3) und die zweite Leitung (4) lotrecht zu den Zellen (2) des Batteriemoduls verlaufen,
- die erste Leitung (3) und die zweite Leitung (4) parallel zueinander angeordnet sind, und
- eine Strömungsrichtung des Fluids in der ersten Leitung (3) entgegengesetzt zu einer Strömungsrichtung des Fluids in der zweiten Leitung (4) ist, wobei
die Batteriemodule (1) derart angeordnet sind, dass die ersten Leitungen (3) und die zweiten Leitungen (4) der Batteriemodule (1) parallel zueinander verlaufen, wobei eine Fließrichtung des Fluids innerhalb der ersten Leitungen (3) bei benachbarten Batteriemodulen (1) identisch oder entgegengesetzt ist, **dadurch gekennzeichnet, dass**
- das Batteriesystem (100) in eine Vielzahl von Teilbereichen (200, 300) mit einer vordefinierten Anzahl von Batteriemodulen (1) unterteilt ist,
- die ersten Leitungen (3) der Batteriemodule (1) innerhalb eines Teilbereichs {200, 300) und die zweiten Leitungen (4) der Batteriemodule (1) innerhalb eines Teilbereichs (200, 300) zwischen einem ersten Batteriemodul (6) und einem letztem Batteriemodul (7) in Reihenschaltung verbunden sind,
- ein Verbindungselement (8) die erste Leitung (3) und die zweite Leitung (4) des letzten Batteriemoduls (1) jedes Teilbereichs (200, 300) verbindet,
- die erste Leitung (3) des ersten Batteriemoduls (6) jedes Teilbereichs (200, 300) mit zumindest einem ersten Verteiler (9) verbunden ist, der das Fluid aufnimmt, und
- die zweite Leitung (4) des ersten Batteriemoduls (6) jedes Teilbereichs (200, 300) mit zumindest einem zweiten Verteiler (10) verbunden ist, der das Fluid abgibt.

2. Batteriesystem (100) nach Anspruch 1, **dadurch gekennzeichnet, dass**
die ersten Leitungen (3) der Batteriemodule (1) und die zweiten Leitungen (4) der Batteriemodule (1) zwischen einem ersten Batteriemodul (6) und einem letztem Batteriemodul (7) in Reihenschaltung verbunden sind,
die erste Leitung (3) des ersten Batteriemoduls (6) das Fluid aufnimmt und die zweite Leitung (4) des ersten Batteriemodul (6) das Fluid abgibt, und
ein Verbindungselement (8) die erste Leitung (3) des letzten Batteriemoduls (7) und die zweite Leitung (4) des letzten Batteriemoduls (7) verbindet.

3. Batteriesystem (100) nach Anspruch 1 oder 2, **dadurch gekennzeichnet, dass**
- jede erste Leitung (3) jedes Batteriemoduls (1) mit zumindest einem ersten Verteiler (9) verbunden ist, der das Fluid aufnimmt,
- jede zweite Leitung (4) jedes Batteriemoduls (1) mit zumindest einem zweiten Verteiler (10) verbunden ist, der das Fluid abgibt, und
- jeweils ein Verbindungselement (8) die erste Leitung (3) und die zweite Leitung (4) jedes Batteriemoduls (1) verbindet.

4. Batteriesystem (100) nach Anspruch 1, 2 oder 3, **dadurch gekennzeichnet, dass** jede Zelle (2) ein Ausgleichsmedium aufweist, durch das eine Temperaturdifferenz zwischen der ersten Leitung (3) und der zweiten Leitung (4) ausgleichbar ist.

5. Batteriesystem (100) nach einem der vorhergehenden Ansprüche, **dadurch gekennzeichnet, dass** jede Zelle (2) ein Gehäuse aufweist, durch das eine Temperaturdifferenz zwischen der ersten Leitung (3) und der zweiten Leitung (4) ausgleichbar ist.

6. Batteriesystem (100) nach einem der vorhergehenden Ansprüche, **dadurch gekennzeichnet, dass** das Fluid ein Kältemittel oder ein Kühlmittel ist.

7. Fahrzeug (400), umfassend ein Batteriesystem (100) nach einem der Ansprüche 1 bis 3.

## Claims

1. A battery system (100), comprising a large number of battery modules (1) with a cooling device, comprising at least one first line (3) and at least one second line (4) in each case, wherein the first line (3) and the second line (4) conduct a fluid and absorb heat from cells (2) of the battery module (1) and transmit it to the fluid, wherein
- the first line (3) and the second line (4) run perpendicular to the cells (2) of the battery module,
- the first line (3) and the second line (4) are arranged parallel to one another, and
- a direction of flow of the fluid in the first line (3) is opposite to a direction of flow of the fluid in the second line (4), wherein
the battery modules (1) are arranged such that the first lines (3) and the second lines (4) of the battery modules (1) run parallel to one another, wherein a direction of flow of the fluid within the first lines (3) is identical or opposite in neighbouring battery modules (1), wherein
- the battery system (100) is subdivided into a large number of partial regions (200, 300) with a predefined number of battery modules (1),
- the first lines (3) of the battery modules (1) within a partial region (200, 300) and the second lines (4) of the battery modules (1) within a partial region (200, 300) are connected in series between a first battery module (6) and a last battery module (7),
**characterised in that**
- a connecting element (8) connects the first line (3) and the second line (4) of the last battery module (1) of each partial region (200, 300),
- the first line (3) of the first battery module (6) of each partial region (200, 300) is connected to at least one first distributor (9) which receives the fluid, and
- the second line (4) of the first battery module (6) of each partial region (200, 300) is connected to at least one second distributor (10) which discharges the fluid.

2. A battery system (100) according to Claim 1, **characterised in that**
the first lines (3) of the battery modules (1) and the second lines (4) of the battery modules (1) are connected in series between a first battery module (6) and a last battery module (7),
the first line (3) of the first battery module (6) receives the fluid and the second line (4) of the first battery module (6) discharges the fluid, and
a connecting element (8) connects the first line (3) of the last battery module (7) and the second line (4) of the last battery module (7).

3. A battery system (100) according to Claim 1 or Claim 2, **characterised in that**
- each first line (3) of each battery module (1) is connected to at least one first distributor (9) which receives the fluid,
- each second line (4) of each battery module (1) is connected to at least one second distributor (10) which discharges the fluid, and
- in each case a connecting element (8) connects the first line (3) and the second line (4) of each battery module (1).

4. A battery system (100) according to Claim 1, 2 or 3, **characterised in that** each cell (2) has a compensation medium by which a temperature difference between the first line (3) and the second line (4) can be compensated.

5. A battery system (100) according to one of the preceding claims, **characterised in that** each cell (2) has a housing by which a temperature difference between the first line (3) and the second line (4) can be compensated.

6. A battery system (100) according to one of the preceding claims, **characterised in that** the fluid is a refrigerant or a coolant.

7. A vehicle (400), comprising a battery system (100) according to one of Claims 1 to 3.

## Revendications

1. Système de batterie (100) comprenant une série de modules de batterie (1) comportant un dispositif de refroidissement ayant chacun au moins une première conduite (3) et au moins une seconde conduite (4), la première conduite (3) et la seconde conduite (4) étant parcourues par un fluide, prélevant de la chaleur de cellules du module de batterie (1) et la transmettant au fluide,
dans lequel
- la première conduite (3) et la seconde conduite (4) s'étendent verticalement vers les cellules (2) du module de batterie,
- la première conduite (3) et la seconde conduite (4) sont parallèles,
- la direction de circulation du fluide dans la première conduite (3) est opposée à la direction de circulation du fluide dans la seconde conduite (4),
les modules de batterie (1) sont conformés de sorte que les premières conduites (3) et les secondes conduites (4) des modules de batterie (1) soient parallèles, la direction de circulation du fluide dans les premières conduites (3) de modules de batterie (1) voisins étant identique ou opposée,
- le système de batterie (100) est subdivisé en une série de zones partielles (200, 300) ayant un nombre prédéfini de modules de batterie (1),
- les premières conduites (3) des modules de batterie (1) à la partie interne d'une zone partielle (200, 300) et les secondes conduites (4) des modules de batterie (1) à la partie interne d'une zone partielle (200, 300) sont branchées entre un premier module de batterie (6) et un dernier module de batterie (7) selon un montage en série,
**caractérisé en ce que**
- un élément de liaison (8) relie la première conduite (3) et la seconde conduite (4) du dernier module de batterie (1) de chaque zone partielle (200, 300),
- la première conduite (3) du premier module de batterie (6) de chaque zone partielle (200, 300) est reliée à au moins un premier distributeur (9) qui reçoit le fluide, et
- la seconde conduite (4) du premier module de batterie (6) de chaque zone partielle (200, 300) est reliée à au moins un second distributeur (10) qui évacue le fluide.

2. Système de batterie (100) conforme à la revendication 1,
**caractérisé en ce que**
les premières conduites (3) des modules de batterie (1) et les secondes conduites (4) des modules de batterie (1) sont branchées en série entre un premier module de batterie (6) et un dernier module de batterie (7), la première conduite (3) du premier module de batterie (6) reçoit le fluide et la seconde conduite (4) du premier module de batterie (6) évacue le fluide, et
un élément de liaison (8) relie la première conduite (3) du dernier module de batterie (7) et la seconde conduite (4) du dernier module de batterie (7).

3. Système de batterie (100) conforme à la revendication 1 ou 2, **caractérisé en ce que**
- chaque première conduite (3) de chaque module de batterie (1) est reliée à au moins un premier distributeur (9) qui reçoit le fluide,
- chaque seconde conduite (4) de chaque module de batterie (1) est reliée à au moins un second distributeur (10) qui évacue le fluide, et
- un élément de liaison (8) respectif relie la première conduite (3) et la seconde conduite (4) de chaque module de batterie (1).

4. Système de batterie (100) conforme à la revendication 1, 2 ou 3,
**caractérisé en ce que**
chaque cellule (2) comporte un moyen d'équilibrage par lequel la différence de température entre la première conduite (3) et la seconde conduite (4) peut être équilibrée.

5. Système de batterie (100) conforme à l'une des revendications précédentes,
**caractérisé en ce que**
chaque cellule (2) comporte un boîtier par lequel la différence de température entre la première conduite (3) et la seconde conduite (4) peut être égalisée.

6. Système de batterie (100) conforme à l'unes des revendications précédentes
**caractérisé en ce que**
le fluide est un fluide réfrigérant ou un fluide de refroidissement.

7. Véhicule (400) comprenant un système de batterie (100) conforme à l'une des revendications 1 à 3.
